# EUROPEAN PATENT APPLICATION

(11) **EP 4 675 814 A1**
(43) Date of publication of application: **07.01.2026**
(21) Application number: 23948988.3
(22) Date of filing: 12.10.2023
(51) Int. Cl.: H01M 50/367, H01M 50/593, H01M 10/058

(54) **BATTERY CELL, BATTERY, AND ELECTRIC DEVICE**

(30) Priority: 16.08.2023 CN 202311034083
(71) Applicant: Contemporary Amperex Technology Co., Limited, Ningde, Fujian 352100 (CN)
(72) Inventor: WU, Kai, Ningde, Fujian 352100 (CN); HAN, Fengsheng, Ningde, Fujian 352100 (CN)
(74) Representative: Ziebig Hengelhaupt Intellectual Property Attorneys Patentanwaltskanzlei PartGmbB
(86) International application number: PCT/CN2023/124318
(87) International publication number: WO 2025/035566

(57) **Abstract**

Provided are a battery cell (20), a battery, and an electrical device. The reliability of the battery cell (20) can be improved. The battery cell (20) comprises: a shell (21), where the shell (21) has a first wall (211), and the first wall (211) is provided with a pressure relief mechanism (213); an electrode assembly (22), where the electrode assembly (22) is accommodated in the shell (21); an insulating member (23), where the insulating member (23) is arranged between the electrode assembly (22) and the first wall (211), the insulating member (23) has an accommodating cavity (26), and the insulating member (23) has a discharge channel in communication with the pressure relief mechanism (213) and the electrode assembly (22); and a supporting member (24), where the supporting member (24) is accommodated in the accommodating cavity (26) for restricting a deformation of the discharge channel.

## Description

The present application claims priority to Chinese Patent Application No. 202311034083.1, filed with the China National Intellectual Property Administration on August 16, 2023 and entitled "BATTERY CELL, BATTERY, AND ELECTRICAL DEVICE", which is incorporated herein by reference in its entirety.

### TECHNICAL FIELD

Embodiments of the present application relate to the field of batteries, more particularly to a battery cell, a battery, and an electrical device.

### BACKGROUND

Energy saving and emission reduction is the key to the sustainable development of the automobile industry. In this case, electric vehicles have become an important part of the sustainable development of the automobile industry due to their advantages of energy efficiency and environmental friendliness. For electric vehicles, battery technology is also an important factor related to the development thereof.

With the development of battery technologies, various properties of batteries are constantly improving. During the service of a battery, the reliability of the performance of a battery cell is an important factor to measure the quality of the battery. Therefore, how to improve the reliability of a battery cell is still a problem to be solved.

### SUMMARY

Embodiments of the present application provide a battery cell, a battery, and an electrical device. The reliability of the battery cell can be improved.

In a first aspect, provided is a battery cell, including: a shell, where the shell has a first wall, and the first wall is provided with a pressure relief mechanism; an electrode assembly, where the electrode assembly is accommodated in the shell; an insulating member, where the insulating member is arranged between the electrode assembly and the first wall, the insulating member has an accommodating cavity, and the insulating member has a discharge channel in communication with the pressure relief mechanism and the electrode assembly; and a supporting member, where the supporting member is accommodated in the accommodating cavity for restricting a deformation of the discharge channel.

The battery cell provided by the embodiment of the present application can restrict the deformation of the discharge channel by the supporting member when thermal runaway occurs inside the battery cell, thereby reducing the possibility of the discharge channel or the pressure relief structure being blocked by the electrode assembly, facilitating the actuation of the pressure relief mechanism to rapidly discharge high-temperature and high-pressure substances inside the battery cell, thus improving the reliability of the battery cell.

In some embodiments, the insulating member includes a first insulating wall. The accommodating cavity is formed between the first insulating wall and the first wall.

The first insulating wall can provide support for the supporting member, reduce the possibility of the supporting member falling off the accommodating cavity, and help to maintain the position of the supporting member relative to the insulating member, thus improving the effect of the supporting member in restricting the deformation of the exhaust channel.

In some embodiments, a projection of the first insulating wall on the first wall in a thickness direction covers a projection of the supporting member on the first wall in the thickness direction.

Thus, a better insulativity can be achieved between the electrode assembly and the first wall, and the possibility of the first wall being charged due to the contact between the electrode assembly and the supporting member and between the supporting member and the first wall is reduced, which is beneficial to improving the reliability of the battery cell.

In some embodiments, the insulating member includes a second insulating wall, the second insulating wall is arranged between the first insulating wall and the first wall, and the accommodating cavity is formed between the second insulating wall and the first insulating wall.

The second insulating wall can isolate the supporting member from the first wall and improves the insulativity between the supporting member and the first wall. In addition, the accommodating cavity formed by the second insulating wall and the first insulating wall can provide a more stable accommodating space for the supporting member, making it difficult for the supporting member to fall off during the assembly process.

In some embodiments, the insulating member includes a second insulating wall. The second insulating wall is arranged on a surface of the insulating member towards the first wall in the thickness direction of the first wall, and the accommodating cavity is formed between the second insulating wall and a surface of the insulating member towards the electrode assembly in the thickness direction of the first wall.

The second insulating wall can isolate the supporting member from the first wall and play an insulating role between the supporting member and the first wall, so that the first wall is not easily charged, thus improving the reliability of the battery cell.

In some embodiments, the insulating member includes a connecting wall. The connecting wall connects the first insulating wall to the second insulating wall. The connecting wall extends along the first direction.

The connecting wall can improve an anti-deformation strength of the insulating member in the thickness direction of the first wall and provide support for the supporting member accommodated in the accommodating cavity, so that the supporting member does not easily fall off.

In some embodiments, the connecting wall is provided with a discharge hole penetrating through the connecting wall in the thickness direction of the connecting wall.

The discharge hole on the connecting wall, together with the accommodating cavity, can form a discharge channel to guide high-temperature and high-pressure substances to flow in a direction towards the pressure relief mechanism, facilitating the actuation of the pressure relief mechanism to rapidly discharge the high-temperature and high-pressure substances inside the battery cell, thus improving the reliability of the battery cell.

In some embodiments, the connecting wall includes a first connecting portion. The first connecting portion is arranged on both sides of the pressure relief mechanism in a lengthwise direction of the first wall. The discharge hole includes a first through hole. The first through hole penetrates through the first connecting portion in the lengthwise direction of the first wall. The first through hole is used for forming the discharge channel.

The first connecting portion and the first through hole can form a discharge channel in the peripheral region of the pressure relief mechanism, which is beneficial to guiding the high-temperature and high-pressure substances generated due to thermal runaway to flow towards the region of the pressure relief mechanism when thermal runaway occurs inside the battery cell, so that the pressure relief mechanism can be actuated in time, thus improving the reliability of the battery cell.

In some embodiments, the insulating member has a second through hole penetrating through the insulating member in the thickness direction of the first wall. The second through hole is arranged opposite to the pressure relief mechanism. The second through hole is used for forming the discharge channel.

The second through hole can be in more direct communication with the pressure relief mechanism and the electrode assembly, so that high-temperature and high-pressure substances inside the battery cell can flow to the pressure relief mechanism more quickly; thus, the pressure relief mechanism can be actuated in time, thus improving the reliability of the battery cell.

In some embodiments, the supporting member is arranged at an edge of the insulating member in a plane perpendicular to the thickness direction of the first wall.

The supporting member is arranged at an edge of the insulating member and does not easily interfere with other members in the battery cell, which is beneficial to improving the qualification rate of the battery cell.

In some embodiments, the supporting member is located at an edge of the insulating member in a width direction of the first wall.

The arrangement of the supporting member along a longer side of the insulating member enables the supporting member to support the insulating member and the electrode assembly to a particular extent in a wider range, thus restricting the deformation of the exhaust channel.

In some embodiments, the supporting member is arranged at intervals along the lengthwise direction of the first wall.

This can reduce the overall weight of the battery cell while restricting the deformation of the discharge channel.

In some embodiments, the supporting member is located at an edge of the insulating member in the lengthwise direction of the first wall.

The supporting member is arranged at a wide side of the insulating member, so that the deformation of the insulating member can be restricted at the corresponding position of the insulating member. Moreover, the movement of the electrode assembly towards the pressure relief mechanism is restricted to a particular extent, and the probability of the electrode assembly blocking the pressure relief mechanism is reduced, thereby maintaining the discharge channel unobstructed.

In some embodiments, the supporting member is arranged in a peripheral region of the pressure relief mechanism.

The supporting member is arranged in the peripheral region of the pressure relief mechanism, so that the further movement of the electrode assembly near the pressure relief mechanism towards the pressure relief mechanism can be more directly restricted, thereby restricting the deformation of the discharge channel near the pressure relief mechanism. The high-temperature and high-pressure substances inside the battery cell can reach the pressure relief mechanism via the discharge channel, so that the pressure relief mechanism is actuated to relieve the high-temperature and high-pressure substances inside the battery cell, thus improving the reliability of the battery cell.

In some embodiments, a plurality of the supporting members enclose in the peripheral region of the pressure relief mechanism to form an accommodating space. The pressure relief mechanism is arranged in the accommodating space.

A plurality of supporting members are arranged around the pressure relief mechanism, so that the deformation of the structure around the pressure relief mechanism can be further restricted to maintain the discharge channel in the peripheral region of the pressure relief mechanism unobstructed.

In some embodiments, the supporting member is provided with a third through hole. The third through hole is used for forming the discharge channel.

The third through hole can provide a path for the flow of the high-temperature and high-pressure substances inside the battery cell, which is beneficial to the discharge of the high-temperature and high-pressure substances, so that the pressure relief mechanism can be actuated in time, thus improving the reliability of the battery cell.

In some embodiments, the supporting member includes an elongated body portion.

The elongated body portion can function to restrict the movement of the electrode assembly in a relatively large range without affecting the discharge capacity of the discharge channel, thereby maintaining the discharge channel unobstructed, reducing the possibility that the high-temperature and high-pressure substances cannot be discharged due to the deformation of the discharge channel, thus improving the reliability of the battery cell.

In some embodiments, the melting point of the supporting member is higher than the melting point of the insulating member.

In the same temperature environment, the supporting member is less likely to liquefy or melt than the insulating member and can maintain its original shape and position in the accommodating cavity. The supporting member functions to support the electrode assembly that moves towards the pressure relief mechanism, making it difficult for the electrode assembly to move to the position where the discharge channel is blocked, thus restricting the deformation of the discharge channel, providing a discharge channel for the high-temperature and high-pressure substances to reach the pressure relief mechanism, which makes it beneficial to improve the reliability of the battery cell.

In some embodiments, the melting point of the supporting member is higher than 100°C.

This is beneficial to being less easily melted when thermal runaway occurs in the battery cell. Thus, an exhaust channel in communication with the pressure relief mechanism can be formed between the first wall and the electrode assembly, so that a thermal runaway gas can be discharged out of the battery cell in time via the pressure relief mechanism, which is beneficial to improving the reliability of the battery cell.

In some embodiments, the first wall is provided with an electrode terminal. The battery cell includes a connecting member. The connecting member is used for electrically connecting the electrode terminal and the electrode assembly. The insulating member has a clearance hole penetrating through the insulating member in the first direction. At least a portion of the connecting member is accommodated in the clearance hole.

The clearance hole can provide a space for the connecting member to electrically connect the electrode terminal and the electrode assembly, so that the electric energy generated in the electrode assembly can be led out of the battery cell to provide electric energy for an electrical device.

In some embodiments, the supporting member is in interference fit with the accommodating cavity.

Thus, the supporting member can be relatively conveniently fixed in the accommodating cavity, so that the supporting member does not easily fall off the accommodating cavity, which is beneficial to maintaining the discharge channel unobstructed when high-temperature and high-pressure substances are generated inside the battery cell, thus facilitating the improvement of the reliability of the battery cell.

In some embodiments, a surface of the supporting member towards the electrode assembly in the thickness direction of the first wall and/or a surface of the supporting member towards the first wall in the thickness direction of the first wall have an insulating layer.

The insulating layer can improve the insulativity between the supporting member and the first wall and reduce the possibility of the shell of the battery cell being charged by the supporting member, thus improving the reliability of the battery cell.

In a second aspect, provided is a battery, including the battery cell according to any one of the embodiments of the first aspect.

In a third aspect, provided is an electrical device, including the battery according to any one of the above embodiments of the second aspect. The battery is used for providing electric energy for the electrical device.

### BRIEF DESCRIPTION OF THE DRAWINGS

In order to provide a clearer explanation of the technical solution of the embodiments of the present application, a brief introduction will be given to the accompanying drawings required in the embodiments of the present application. It is evident that the accompanying drawings described below are only some embodiments of the present application. For those of ordinary skill in the art, other accompanying drawings can also be obtained based on the drawings without any creative effort.
FIG. 1 is a schematic structural view of a vehicle provided by an embodiment of the present application.
FIG. 2 is a schematic structural view of a battery provided by an embodiment of the present application.
FIG. 3 is an exploded schematic structural view of a battery cell provided by an embodiment of the present application.
FIG. 4 is an exploded schematic structural view of a first wall, insulating member, and supporting member provided by an embodiment of the present application.
FIG. 5 is a schematic structural view of a first wall, insulating member, and supporting member provided by an embodiment of the present application.
FIG. 6 is a simplified structural view of a discharge path provided by an embodiment of the present application.
FIG. 7 is a schematic structural view of another first wall, insulating member, and supporting member provided by an embodiment of the present application.
FIG. 8 is a view of the structure in FIG. 7 along the thickness direction of the first wall.
FIG. 9 is a cross-sectional view of the structure in FIG. 8 along an A-A direction.
FIG. 10 is another cross-sectional view of the structure in FIG. 8 along the A-A direction.
FIG. 11 is an axonometric view corresponding to the structure shown in FIG. 10.
FIG. 12 is another cross-sectional view of the structure in FIG. 8 along the A-A direction.
FIG. 13 is an exploded schematic structural view of the structure in FIG. 7.
FIG. 14 is a schematic structural view of another first wall, insulating member, and supporting member provided by an embodiment of the present application.
FIG. 15 is an exploded schematic structural view of the structure in FIG. 14.
FIG. 16 is an exploded schematic structural view of another first wall, insulating member, and supporting member provided by an embodiment of the present application.
FIG. 17 is an exploded schematic structural view of another first wall, insulating member, and supporting member provided by an embodiment of the present application.

In the drawings, the drawings are not drawn to actual scale.

### DETAILED DESCRIPTION

The embodiments of the present application will be further described in detail with reference to the drawings and embodiments. The following detailed description of embodiments and the drawings are used to illustrate the principles of the present application by way of example; however, they cannot be used to limit the scope of the present application, that is, the present application is not limited to the described embodiments.

In the description of the present application, it needs to be noted that the orientations or positional relationships indicated by the terms "upper", "lower", "left", "right", "inside", "outside", etc. are only for the convenience of describing the present application and simplifying descriptions and do not indicate or imply that the devices or elements referred to thereby must have the specific orientations or be constructed and operated in specific orientations; therefore, they cannot be understood as limitations to the present application. Moreover, the terms "first", "second", "third" and the like are used for descriptive purposes only and are not to be construed as indicating or implying relative importance. "Perpendicular" does not mean perpendicular in a strict sense, but rather within an allowable range of error. "Parallel" does not mean parallel in a strict sense, but rather within an allowable range of error. All technical and scientific terms used in the present application have the same meanings as commonly understood by those skilled in the technical field to which the present application belongs. In the present application, the terms used in the specification of the present application are merely for the purpose of describing specific embodiments and are not intended to limit the present application. The terms "include", "include", and any variations thereof in the specification and claims of the present application and in the above BRIEF DESCRIPTION OF THE DRAWINGS are intended to cover non-exclusive inclusion.

The directional words appearing in the following description are all the directions shown in the drawings and are not intended to limit the specific structure of the present application. In the specification of the present application, it needs to be noted that unless otherwise explicitly specified or defined, the terms "mount", "link", and "connect" should be understood in a broad sense. For example, the connection may be fixed connection, detachable connection, or integral connection; or the connection may be a mechanical connection or an electrical connection; or the connection may be either direct connection or indirect connection via an intermediary. For those of ordinary skill in the art, the specific meanings of the above terms in the present application can be understood as the case may be.

Reference to "an embodiment" in the present application means that a particular feature, structure or characteristic described with reference to the embodiment may be included in at least one embodiment of the present application. The appearance of this phrase in various places in the specification does not necessarily refer to the same embodiment, nor is it an independent or alternative embodiment mutually exclusive with other embodiments. Those skilled in the art explicitly or implicitly understands that the embodiments described in the present application can be combined with other embodiments.

The "plurality of" appearing in the present application refers to two or more (including two). Similarly, "a plurality of groups" refers to two or more groups (including two groups), and "a plurality of pieces" refers to two or more pieces (including two pieces).

In an embodiment of the present application, like reference numerals denote like components, and for the sake of brevity, detailed descriptions of the same components are omitted in different embodiments. It should be understood that the dimensions, such as thickness, length and width, of various components and the dimensions, such as overall thickness, length and width, of integrated devices in the embodiments of the present application, as shown in the accompanying drawings are only illustrative and should not constitute any limitations on the present application.

In the present application, the battery cell may include lithium-ion secondary batteries, lithium-ion primary batteries, lithium-sulfur batteries, sodium/lithium-ion batteries, lithium metal batteries, magnesium-ion batteries, etc. This is not limited in the embodiments of the present application. The battery cell can be cylindrical, flat, cuboid, or in other shapes. This is not limited in the embodiments of the present application. Generally, depending on the encapsulating method, battery cells are divided into three types: columnar battery cells, prismatic battery cells, and pouch battery cells. This is also not limited in the embodiments of the present application.

A battery mentioned in an embodiment of the present application means including one or more battery cells to provide a single physical module with a higher voltage and capacity. For example, the battery mentioned in the present application may include a battery module, a battery pack, etc. The battery generally includes a box body for packaging one or more battery cells. The box body can prevent liquids or other foreign matters from affecting the charging or discharging of the battery cell.

A battery cell includes an electrode assembly and an electrolyte solution. The electrode assembly is composed of a positive electrode plate, a negative electrode plate, and a separator. The battery cell works mainly relying on the movement of metal ions between the positive electrode plate and the negative electrode plate. The positive electrode plate includes a positive electrode current collector and a positive electrode active material layer. The positive electrode active material layer coats a surface of the positive electrode current collector. The positive electrode current collector where no positive electrode active material layer is coated protrudes from the positive electrode current collector where the positive electrode active material layer is coated, and the positive electrode current collector where the positive electrode active material layer is coated is used as a positive electrode tab. Taking a lithium-ion battery as an example, a material of the positive electrode current collector may be aluminum, and a positive electrode active material may be lithium cobalt oxide, lithium iron phosphate, ternary lithium, lithium manganese oxide, etc. The negative electrode plate includes a negative electrode current collector and a negative electrode active material layer. The negative electrode active material layer coats a surface of the negative electrode current collector. The negative electrode current collector where no negative electrode active material layer is coated protrudes from the negative electrode collector where the negative electrode active material layer is coated, and the negative electrode current collector where no negative electrode active material layer is coated is used as a negative electrode tab. The material of the negative electrode current collector can be copper. The negative electrode active material can be carbon, silicon, the metal lithium, a lithium alloy, etc. To ensure high-current conduction without fusing, there are a plurality of positive electrode tabs which are stacked together, and there are a plurality of negative electrode tabs which are stacked together. The material of the separator may be polypropylene (PP), polyethylene (PE), etc. In addition, the electrode assembly in an embodiment of the present application has, without limitation, a wound structure or a stacked structure.

During the service of the battery cell, the battery cell may generate a large amount of high-temperature and high-pressure substances such as a thermal runaway gas due to mechanical external forces or internal chemical reactions. These high-temperature and high-pressure substances necessarily reach the pressure relief structure through a gap between the electrode assembly and the case or discharge channels formed by through holes arranged in other structures, and the pressure relief mechanism is actuated by a high temperature or a high pressure to relieve the high-temperature and high-pressure substances inside the battery cell. However, with the continuous increase of the energy density of the battery cell, the thermal runaway rate in the battery cell constantly increases, and the gas production rate and the produced gas amount increase significantly. Where the gas production rate and the produced gas amount are large enough, the electrode assembly may be driven by the high-temperature and high-pressure substances to move in a direction towards the pressure relief mechanism, blocking the pressure relief mechanism. Some structures used in the battery cell for forming exhaust channels may also melt in a high temperature environment, which further reduces the discharge, leading to a failure in fast discharge of the high-temperature and high-pressure substances from the battery cell, making the battery cell prone to cracking to reduce the reliability of the battery cell.

In view of this, an embodiment of the present application provides a battery cell. A supporting member is provided in an insulating member of the battery cell. Even if an electrode assembly is driven by high-temperature and high-pressure substances to move in a direction towards a pressure relief mechanism, the supporting member can still restrict the deformation of the insulating member and reduces the movement distance of the electrode assembly, which makes it difficult for the electrode assembly to move to a position where the pressure relief mechanism is blocked, thereby maintaining the discharge channel unobstructed, facilitating the improvement of the discharge rate of high-temperature and high-pressure substances inside the battery cell, thus improving the reliability of the battery cell.

The technical solutions described in the embodiments of the present application are all suitable for electrical devices in which batteries are used. The electrical device can be a vehicle, a mobile phone, a portable device, a laptop, a ship, a spacecraft, an electric toy, an electric tool, etc. Vehicles can be fuel vehicles, gas vehicles, or new energy vehicles. New energy vehicles can be all-electric vehicles, hybrid vehicles, or extended-range vehicles. Spacecrafts include aircrafts, rockets, space shuttles, spaceships, etc. Electric toys include fixed or mobile electric toys, such as game machines, electric vehicle toys, electric ship toys, electric aircraft toys, etc. Electric tools include metal cutting electric tools, grinding electric tools, assembling electric tools, and railway electric tools, such as electric drills, electric grinders, electric wrenches, electric screwdrivers, electric hammers, electric impact drills, concrete vibrators, and electric planers. The embodiments of the present application include, but are not limited to, the above electrical devices.

In the following embodiments, for the convenience of explanation, a vehicle is used for example as the electrical device for illustration.

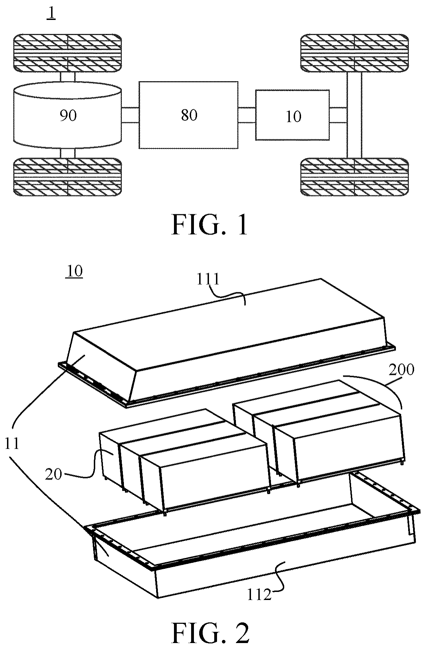

FIG. 1 shows a schematic structural view of a vehicle 1 of an embodiment of the present application. The vehicle 1 can be a fuel vehicle, a gas vehicle, or a new energy vehicle. The new energy vehicle can be an all-electric vehicle, a hybrid electric vehicle, an extended range vehicle, etc. A motor 90, a controller 80, and a battery 10 can be arranged inside the vehicle 1. The controller 80 is used for controlling the battery 10 to supply power to the motor 90. For example, the battery 10 may be arranged at the bottom or the front or rear of the vehicle 1. The battery 10 can be used for supplying power to the vehicle 1. For example, the battery 10 can be used as an operating power source for the vehicle 1, and it can be used for a circuitry of the vehicle 1, for example, for the working power demand when the vehicle 1 is started, navigated and operated. In another embodiment of the present application, the battery 10 can not only serve as an operating power source for the vehicle 1, but also as a driving power source for the vehicle 1, in place of or partially in place of fuel or natural gas, to supply a driving power to the vehicle 1.

In order to satisfy different power demands, the battery can include a plurality of battery cells, among which, a plurality of battery cells can be connected in series, or in parallel, or in series-parallel. Being connected in series-parallel means a mixture of series connection and parallel connection. A battery can also be referred to as a battery pack. Optionally, a plurality of battery cells can be connected in series, or in parallel, or in series-parallel in advance to form a battery module, and a plurality of battery modules are further connected in series, or in parallel, or in series-parallel to form a battery. That is to say, a plurality of battery cells can directly form a battery; or battery modules can be formed in advance, and the battery modules are then formed into a battery.

For example, FIG. 2 shows a schematic structural view of a battery 10 of an embodiment of the present application. The battery 10 may include at least one battery module 200. The battery module 200 includes a plurality of battery cells 20. The battery 10 may further include a box body 11. The interior of the box body 11 is a hollow structure. A plurality of battery cells 20 are accommodated in the box body 11. FIG. 2 shows a possible implementation of the box body 11 of the embodiment of the present application. As shown in FIG. 2, the box body 11 can include two parts, herein referred to as a first part 111 and a second part 112, respectively. The first part 111 and the second part 112 are buckled together. The shapes of the first part 111 and the second part 112 can be determined depending on the combined shape of the battery module 200. At least one of the first part 111 and the second part 112 has an opening. For example, as shown in FIG. 2, both the first part 111 and the second part 112 can be hollow cuboids, and only one face of each of the parts is an open face. The opening of the first part 111 and the opening of the second part 112 are arranged opposite to each other, and the first part 111 and the second part 112 are buckled with each other to form the box body 11 with a closed chamber.

Still for example, unlike what is shown in FIG. 2, only one of the first part 111 and the second part 112 may be a hollow cuboid with an opening, while the other part is in a plate shape to cover the opening. For example, by way of example here, where the second part 112 is a hollow cuboid with only one face as an open face and the first part 111 is in a plate shape, the first part 111 covers the opening of the second part 112 to form a box body 11 with a closed chamber. The closed chamber can be used for accommodating a plurality of battery cells 20. The plurality of battery cells 20 are connected to one another in parallel, or in series, or in series-parallel, and then placed in the box body 11 formed by buckling the first part 111 and the second part 112.

Optionally, the battery 10 may also include other structures, which will not be repeated in detail here. For example, the battery 10 may further include a busbar component for realizing electrical connection between the plurality of battery cells 20, e.g., parallel connection, or series connection, or series-parallel connection. Specifically, by means of the busbar component, the electrical connection between the battery cells 20 can be realized by connecting the electrode terminals of the battery cells 20. Furthermore, the busbar component may be fixed to the electrode terminal of the battery cell 20 by welding. The electric energy of the plurality of battery cells 20 can be further led out by passing a conductive structure through the box body 11.

According to different power demands, the number of battery cells 20 in the battery module 200 can be set to any numerical value. The plurality of battery cells 20 can be connected in series, or in parallel, or in series-parallel to achieve a greater capacity or power. Since the number of the battery cells 20 included in each battery 10 may be relatively large, for the convenience of installation, the battery cells 20 are arranged in groups, and each group of battery cells 20 are formed into a battery module 200. The number of battery cells 20 included in the battery module 200 is not limited and can be set as required. The battery 10 may include a plurality of battery modules 200. These battery modules 200 may be connected in series, or in parallel, or in series-parallel.

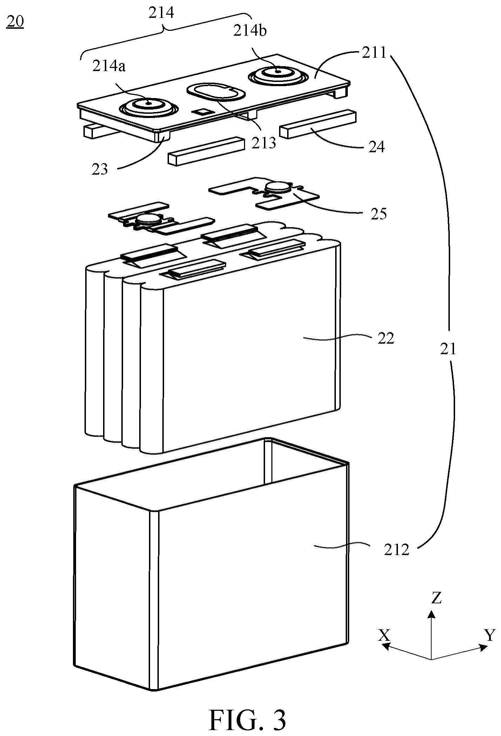

FIG. 3 shows an exploded schematic structural view of a battery cell 20 provided by an embodiment of the present application. As shown in FIG. 3, the battery cell 20 includes a shell 21, an electrode assembly 22, an insulating member 23, and a supporting member 24. The shell 21 has a first wall 211. The first wall 211 is provided with a pressure relief mechanism 213. The electrode assembly 22 is accommodated in the shell 21. An insulating member 23 is arranged between the electrode assembly 22 and the first wall 211. The insulating member 23 has an accommodating cavity 26. The insulating member 23 has a discharge channel in communication with the pressure relief mechanism 213 and the electrode assembly 22. A supporting member 24 is accommodated in the accommodating cavity 26 for restricting a deformation of the discharge channel.

The battery cell 20 may include a shell 21 and one or more electrode assemblies 22. The shell 21 may have a plurality of walls. The first wall 211 refers to one or more walls of the shell 21. The shell 21 of the battery cell 20 may be determined according to the combined shape of one or more electrode assemblies 22. For example, the shell 21 may be a cuboid, a cube, or a cylinder. The shell 21 may include a first wall 211 and a case 212. The case 212 may have a hollow structure. For example, the case 212 may be a hollow cuboid, a cube, or a cylinder. One face of the case 212 has an opening so that one or more electrode assemblies 22 can be placed in the case 212. For example, when the case 212 is a hollow cuboid or cube, one of the planes of the case 212 is an open face, that is, the plane has no wall body, so that the inside and outside of the case 212 are in communication. When the case 212 is a hollow cylinder, an end face of the case 212 is an open face, that is, the end face has no wall body, so that the inside and outside of the case 212 are in communication. The first wall 211 covers the opening and is connected to the case 212 to form a closed cavity for accommodating the electrode assembly 22. The case 212 is filled with an electrolyte, such as an electrolyte solution.

The first wall 211 is provided with a pressure relief mechanism 213. When the temperature and/or pressure inside the battery cell 20 reaches a threshold, the pressure relief mechanism 213 can be actuated to relieve the temperature and/or pressure inside the battery cell 20. The "actuated" mentioned in the embodiment of the present application means that the pressure relief mechanism 213 performs an action or is activated to a particular state, so that the pressure and temperature inside the battery cell 20 can be relieved. Actions performed by the pressure relief mechanism 213 may include, but are not limited to, rupturing, breaking, tearing, or opening at least a portion of the pressure relief mechanism 213, etc. When the pressure relief mechanism 213 is actuated, the high-temperature and high-pressure substances inside the battery cell 20 are discharged from the actuated position as emissions. In this way, the pressure and temperature in the battery cell 20 can be relieved at a controllable pressure or temperature, thereby reducing the possibility of accidents. The emissions from the battery cell 20 as mentioned in the embodiment of the present application include, but are not limited to, an electrolyte solution, dissolved or split positive and negative electrode plates, separator fragments, high-temperature and high-pressure gases generated during reaction, flames, etc.

The electrode assembly 22 is a component of the battery cell 20 where an electrochemical reaction occurs. The electrode assembly 22 can be a cylinder, a cuboid, etc. If the electrode assembly 22 has a cylindrical structure, the case 212 can also be a cylindrical structure, and if the electrode assembly 22 has a cuboid structure, the case 212 may also be a cuboid structure. For convenience of explanation, the embodiment of the present application takes the case 212 as a cuboid as an example. For any one electrode assembly 22, the electrode assembly 22 may include at least two tabs. The at least two tabs may include at least one positive electrode tab and at least one negative electrode tab. The positive electrode tab may be formed by stacking a portion of the positive electrode plate where no positive active material layer is coated, and the negative electrode tab may be formed by stacking a portion of the negative electrode plate where no negative active material layer is coated.

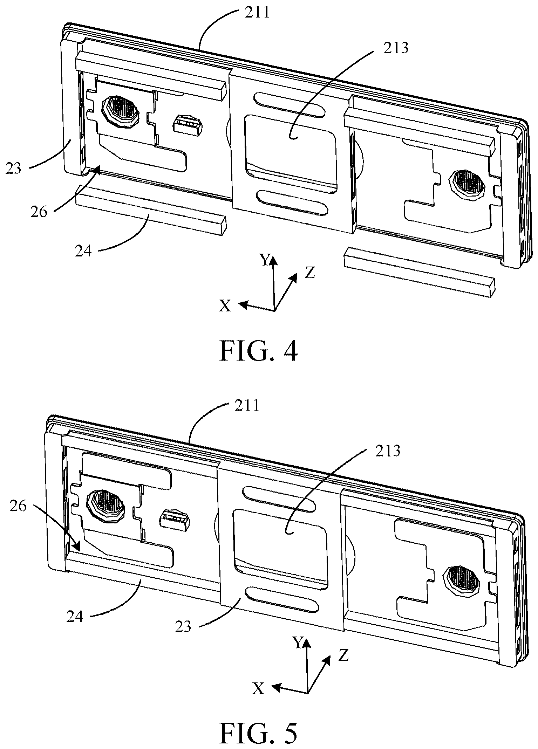

The insulating member 23 is arranged between the electrode assembly 22 and the first wall 211 and serves to insulate the electrode assembly 22 from the first wall 211, so as to reduce the possibility of the first wall 211 being charged. Optionally, the material of the insulating member 23 may include a polypropylene (PP) material, a polyphenylene sulfide (PPS) material, a soluble polytetrafluoroethylene (PFA) material, etc. FIG. 4 shows a schematic structural view of a first wall 211, an insulating member 23, and a supporting member 24. As shown in FIG. 4, the insulating member 23 may include spaces recessed with respect to a body portion of the insulating member 23, and these recessed spaces form an accommodating cavity 26 of the insulating member 23. The insulating member 23 has a discharge channel in communication with the pressure relief mechanism 213 and the electrode assembly 22. The discharge channel refers to a path inside the battery cell 20 by which high-temperature and high-pressure substances reach the pressure relief mechanism 213 when the high-temperature and high-pressure substances are generated inside the battery cell 20. In some embodiments, the high-temperature and high-pressure substances can be generated in a region where the electrode assembly 22 is located, and thus, the discharge channel can also be understood as being used for brining the region inside the battery cell 20 where the electrode assembly 22 is located in communication with the region where the pressure relief mechanism 213 is located.

The supporting member 24 is arranged in the accommodating cavity 26 of the insulating member 23. As shown in FIG. 5, in some embodiments, at least a portion of the supporting member 24 is accommodated in the accommodating cavity 26. In some embodiments, the material of the supporting member 24 may be different from that of the insulating member 23. For example, the hardness, melting point and other properties of the material of the supporting member 24 may be different from those of the material of the insulating member 23. Specifically, the material of the supporting member 24 may be a high-temperature-resistant material. That is, where thermal runaway occurs in the battery cell 20, the supporting member 24 cannot be melted by high-temperature substances generated due to thermal runaway. Optionally, the material of the supporting member 24 may include at least one hard material selected from metals, graphite, polytetrafluoroethylene, mica, ceramic, or other materials.

In one possible embodiment, the supporting member 24 may be fixedly connected to the insulating member 23. For example, the supporting member 24 may be adhered to the surface of the insulating member 23. In another possible embodiment, the supporting member 24 can be accommodated in the accommodating cavity 26 by means of interference fit, thereby reducing the possibility of the supporting member 24 falling off from the accommodating cavity 26.

Where thermal runaway occurs inside the battery cell 20, the supporting member 24 can restrict the deformation of the discharge channel and maintain the exhaust channel unobstructed. Therefore, the high-temperature and high-pressure substances generated due to thermal runaway can reach the pressure relief mechanism 213 via the exhaust channel, so that the pressure relief mechanism 213 is actuated. In an embodiment of the present application, the supporting member can restrict the deformation of the discharge channel formed by the insulating member. The deformation of the discharge channel refers to the deformation beyond the intrinsic elastic range of the insulating member, and restricting the deformation of the discharge channel refers to reducing the degree of deformation of the discharge channel. That is to say, an embodiment of the present application allows the discharge channel to be deformed within the intrinsic elastic range thereof. Compared with the case where no supporting member is arranged on the insulating member, the supporting member can greatly reduce the deformation of the discharge channel formed by the insulating member under the action of an external force, so that the discharge channel is not easily deformed to the extent that high-temperature and high-pressure substances cannot be discharged to the pressure relief mechanism.

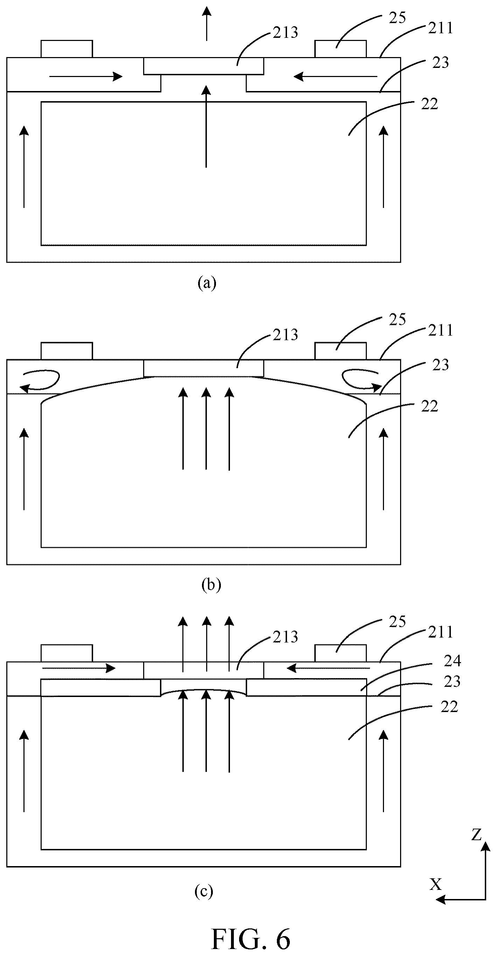

Taking FIG. 6 as an example for illustration, FIG. 6 shows a possible path by which high-temperature and high-pressure substances generated due to thermal runaway are discharged when the thermal runaway occurs inside the battery cell 20, and a simplified structural view showing the change of the electrode assembly 22 under the action of the high-temperature and high-pressure substances. As shown in FIG. 6 (a), where a relatively small amount of high-temperature and high-pressure substances are generated inside the battery cell 20, the high-temperature and high-pressure substances can be gathered near the pressure relief mechanism 213 via the discharge channel inside the battery cell 20, so that the pressure relief mechanism 213 is actuated to relieve the high-temperature and high-pressure substances inside the battery cell 20. As shown in FIG. 6 (b), where no supporting member 24 is provided in the battery cell 20 and a large amount of high-temperature and high-pressure substances are generated inside the battery cell 20, the electrode assembly 22 is driven by the high-temperature and high-pressure substances to move towards the pressure relief mechanism 213, and the insulating member 23 easily melts and softens under the action of the high-temperature substances. Where the electrode assembly 22 further moves towards the pressure relief mechanism 213, the melted and softened insulating member 23 also deforms as the electrode assembly 22 moves, resulting in the blockage of the discharge channel. On the one hand, the high-temperature and high-pressure substances cannot reach the pressure relief mechanism 213 via the discharge channel, and the temperature or pressure in the peripheral region of the pressure relief mechanism 213 cannot reach an actuation threshold, so the pressure relief mechanism 213 cannot be actuated; on the other hand, driven by the high-temperature and high-pressure substances, the electrode assembly 22 may further block the pressure relief mechanism 213, which may also cause a failure in normal actuation of the pressure relief mechanism 213. In addition, the high-temperature and high-pressure substances accumulate inside the battery cell 20 to a particular extent, which easily causes explosion. As shown in FIG. 6 (c), the battery cell 20 provided by the embodiment of the present application is provided with a supporting member 24. Where a large amount of high-temperature and high-pressure substances are generated inside the battery cell 20, even if the insulating member 23 melts and softens under the action of the high-temperature substances, the supporting member 24 can still restrict the deformation of the discharge channel of the insulating member 23 and maintain the discharge channel unobstructed as much as possible when the electrode assembly 22 moves, so that the high-temperature and high-pressure substances can reach the pressure relief mechanism 213. In addition, the supporting member 24 can also restrict the further movement of the electrode assembly 22, reduce the possibility of the pressure relief mechanism 213 being directly blocked by the electrode assembly 22, and thus also maintain the discharge channel unobstructed.

The battery cell 20 provided by the embodiment of the present application can restrict the deformation of the discharge channel by the supporting member 24 when thermal runaway occurs inside the battery cell 20, thereby reducing the possibility of the discharge channel or the pressure relief structure being blocked by the electrode assembly 22, facilitating the actuation of the pressure relief mechanism 213 to rapidly discharge high-temperature and high-pressure substances inside the battery cell 20, thus improving the reliability of the battery cell 20.

According to some embodiments of the present application, optionally, the insulating member 23 includes a first insulating wall 231. An accommodating cavity 26 is formed between the first insulating wall 231 and the first wall 211.

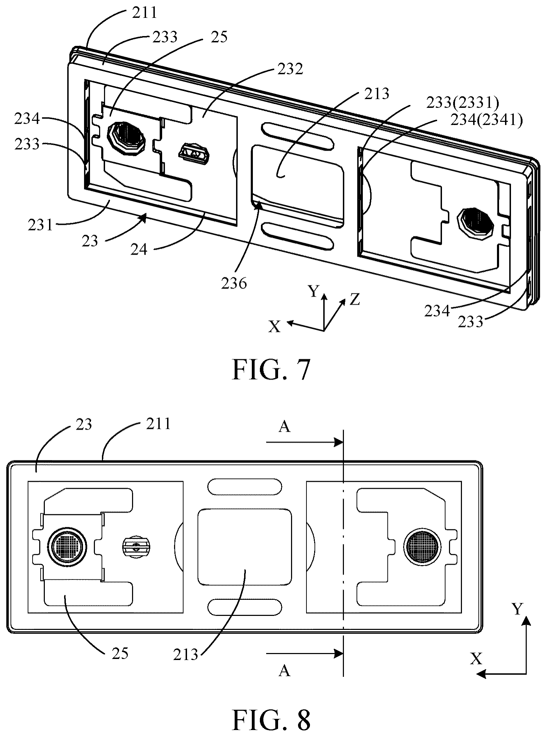

As shown in FIG. 7, the first insulating wall 231 is located on a surface on the side of the insulating member 23 towards the battery assembly along the thickness direction Z of the first wall 211. Specifically, the first insulating wall 231 may have a sheet-like structure perpendicular to the thickness direction Z of the first wall 211.

There is a gap between the first insulating wall 231 and the first wall 211. Specifically, there is a gap in the thickness direction Z of the first wall 211. The thickness direction Z of the first wall 211 can be the thickness direction Z of the insulating member 23, which is perpendicular to the lengthwise direction X and width direction Y of the first wall 211. This gap is used for forming an accommodating cavity 26 for accommodating the supporting member 24.

As shown in FIG. 7, the supporting member 24 is accommodated in the accommodating cavity formed between the first insulating wall 231 and the first wall 211. The first insulating wall 231 provides support for the supporting member 24 on the side of the supporting member 24 towards the electrode assembly 22 along the thickness direction Z of the first wall 211.

The first insulating wall 231 can provide support for the supporting member 24, reduce the possibility of the supporting member 24 falling off the accommodating cavity 26, and help to maintain the position of the supporting member 24 relative to the insulating member 23, thus improving the effect of the supporting member 24 in restricting the deformation of the exhaust channel.

According to some embodiments of the present application, optionally, a projection of the first insulating wall 231 in the thickness direction Z of the first wall 211 covers a projection of the supporting member 24 in the thickness direction Z of the first wall 211.

In one possible embodiment, the supporting member 24 is arranged in the accommodating cavity 26. One side of the supporting member 24 along the thickness direction Z of the first wall 211 is in contact with the first wall 211, and the other side is in contact with the first insulating wall 231. In the thickness direction Z of the first wall 211, the projection of the first insulating wall 231 covers the projection of the supporting member 24, so the first insulating wall 231 can achieve insulation between the supporting member 24 and the electrode assembly 22 in the thickness direction Z of the first wall 211. The first insulating wall 231 can improve the insulativity between the electrode assembly 22 and the supporting member 24, regardless of whether the supporting member 24 itself is an insulating material.

Thus, a better insulativity can be achieved between the electrode assembly 22 and the first wall 211, and the possibility of the first wall 211 being charged due to the contact between the electrode assembly 22 and the supporting member 24 and between the supporting member 24 and the first wall 211 is reduced, which is beneficial to improving the reliability of the battery cell 20.

According to some embodiments of the present application, optionally, the insulating member 23 includes a second insulating wall 232. The second insulating wall 232 is arranged between the first insulating wall 231 and the first wall 211, and an accommodating cavity 26 is formed between the second insulating wall and the first insulating wall 231.

In an embodiment of the present application, the insulating member 23 can include both the first insulating wall 231 and the second insulating wall 232. The second insulating wall 232 may have a sheet-like structure perpendicular to the thickness direction Z of the first wall 211. There is a gap between the first insulating wall 231 and the second insulating wall 232. The gap is namely the accommodating cavity 26 for accommodating the supporting member.

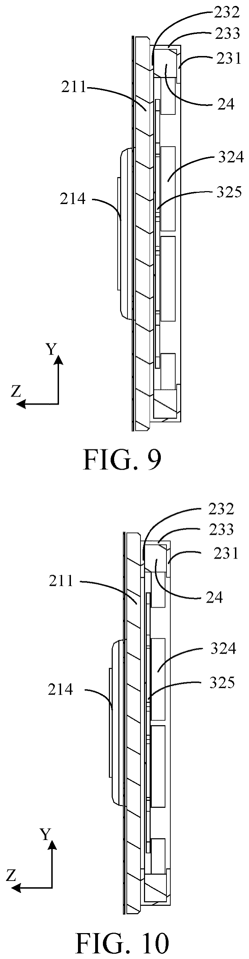

FIG. 8 shows a view of the structure in FIG. 7 along the thickness direction Z of the first wall 211. FIG. 9 is a possible cross-sectional view of the structure in FIG. 8 along an A-A direction.

As shown in FIGs. 8 and 9, the second insulating wall 232 may be a portion of the insulating member 23 in direct contact with the first wall 211. Optionally, the second insulating wall 232 may be fixedly connected to the first wall 211. An accommodating cavity 26 is formed between the second insulating wall 232 and the first insulating wall 231. The supporting member 24 is accommodated in the accommodating cavity 26. Portions of the first wall 211 where no components with particular functions are provided can all be covered by the second insulating wall 232. Components with particular functions on the first wall 211 can be, for example, a component for electrically connecting the electrode terminal 214 and the electrode assembly 22, a liquid injection hole, etc. The second insulating wall 232 shown in FIGs. 8 and 9 covers the surface of the first wall 211 towards the electrode assembly 22 as much as possible, so that the insulating insulativity of the insulating member 23 can be improved.

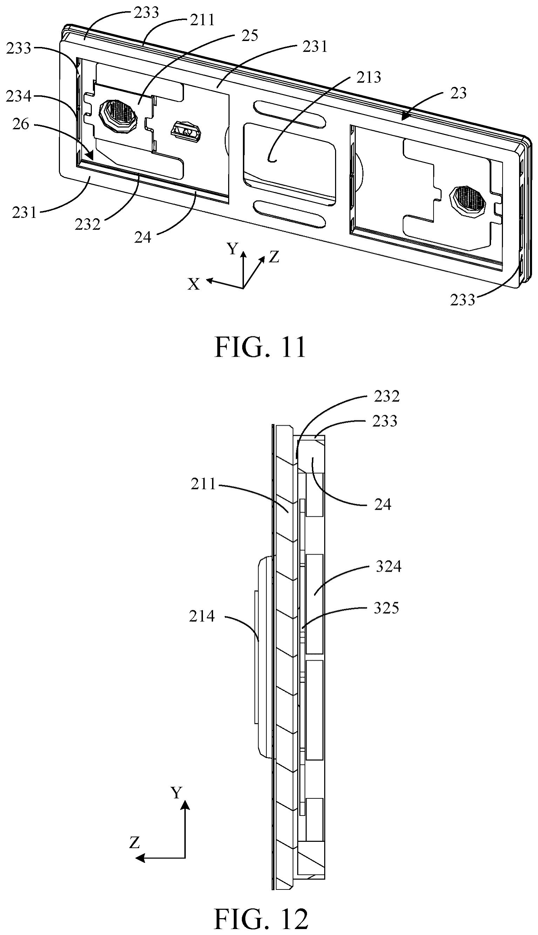

FIG. 10 is another possible cross-sectional view of the structure in FIG. 8 along the A-A direction. FIG. 11 is an axonometric view corresponding to the structure shown in FIG. 10.

As shown in FIGs. 10 and 11, the second insulating wall 232 may likewise be a portion of the insulating member 23 in direct contact with the first wall 211. The second insulating wall 232 may be only in the region where the supporting member 24 is located, so as to isolate the supporting member 24 from the first wall 211. The supporting member 24 is accommodated in the accommodating cavity 26 formed between the second insulating wall 232 and the first insulating wall 231. In one possible embodiment, the projection of the second insulating wall 232 can cover the projection of the supporting member 24 in the thickness direction Z of the first wall 211. The second insulating wall 232 shown in FIGs. 10 and 11 can reduce the weight of the insulating member 23 and the manufacturing cost of the insulating member 23 under the condition of satisfying the insulativity between the first wall 211 and the electrode assembly 22.

The second insulating wall 232 can isolate the supporting member 24 from the first wall 211 and improves the insulativity between the supporting member 24 and the first wall 211. In addition, the accommodating cavity 26 formed by the second insulating wall 232 and the first insulating wall 231 can provide a more stable accommodating space for the supporting member 24, making it difficult for the supporting member 24 to fall off during the assembly process.

According to some embodiments of the present application, optionally, the insulating member 23 includes a second insulating wall 232. The second insulating wall 232 is arranged on a surface of the insulating member 23 towards the first wall 211 in the thickness direction Z of the first wall 211, and the accommodating cavity 26 is formed between the second insulating wall 232 and a surface of the insulating member 23 towards the electrode assembly 22 in the thickness direction Z of the first wall 211.

FIG. 12 is another possible cross-sectional view of the structure in FIG. 8 along the A-A direction. As shown in FIG. 12, the second insulating wall 232 is arranged on a surface of the insulating member 23 towards the first wall 211 in the thickness direction Z of the first wall 211. Optionally, the second insulating wall 232 can be connected to the first wall 211. In the embodiment as shown in FIG. 12, the insulating member 23 can include the second insulating wall 232 without including the first insulating wall 231. In one possible embodiment, portions of the first wall 211 where no components with particular functions are provided can all be covered by the second insulating wall 232. Optionally, the second insulating wall 232 may be only in the region where the supporting member 24 is located, so as to isolate the supporting member 24 from the first wall 211.

The accommodating cavity 26 can be formed between the second insulating wall 232 and a surface of the insulating member 23 towards the electrode assembly 22 in the thickness direction Z of the first wall 211. The supporting member 24 is accommodated in the accommodating cavity 26.

The second insulating wall 232 can isolate the supporting member 24 from the first wall 211 and play an insulating role between the supporting member 24 and the first wall 211, so that the first wall 211 is not easily charged, thus improving the reliability of the battery cell 20.

According to some embodiments of the present application, optionally, the insulating member 23 includes a connecting wall 233. The connecting wall 233 connects the first insulating wall 231 to the second insulating wall 232. The connecting wall 233 extends along the thickness direction Z of the first wall 211.

As shown in FIGs. 7 to 12, in one possible embodiment, the connecting wall 233 can extend along the thickness direction Z of the first wall 211 and the width direction Y of the first wall 211 to provide support for the gap between the first insulating wall 231 and the second insulating wall 232. Optionally, the connecting wall 233 can be arranged either at an edge of the insulating member 23 or in a middle region of the insulating member 23, so as to enhance the anti-deformation strength of the corresponding region of the insulating member 23.

In another possible embodiment, the connecting wall 233 can extend along the thickness direction Z of the first wall 211 and the lengthwise direction X of the first wall 211. The connecting wall 233 is arranged at an edge of the insulating member 23, so that the connecting wall can not only provide support for the gap between the first insulating wall 231 and the second insulating wall 232, but can also, together with the first insulating wall 231 and the second insulating wall 232, form the accommodating cavity 26 for accommodating the supporting member 24. In this case, the connecting wall 233 can provide support for the supporting member 24 in the width direction Y of the first wall 211.

In another possible embodiment, the edges of the insulating member 23 in the lengthwise direction X of the first wall 211 and the width direction Y of the first wall 211 can both be provided with connecting walls 233, so as to improve the overall strength and stability of the insulating member 23. Optionally, the middle region of the insulating member 23 may also be provided with a connecting wall 233, so as to enhance the anti-deformation strength of the middle region of the insulating member 23.

The connecting wall 233 can improve an anti-deformation strength of the insulating member 23 in the thickness direction Z of the first wall 211 and provide support for the supporting member 24 accommodated in the accommodating cavity 26, so that the supporting member 24 does not easily fall off.

According to some embodiments of the present application, optionally, the connecting wall 233 is provided with a discharge hole 234 penetrating through the connecting wall 233 in the thickness direction Z of the connecting wall 233.

The connecting wall 233 is a structure on the insulating member 23 for connecting the first insulating wall 231 and the second insulating wall 232. The discharge hole 234 penetrates through the connecting wall 233 in the thickness direction Z of the connecting wall 233. The high-temperature and high-pressure substances generated inside the battery cell 20 can escape to a gap between a first connecting wall 233 and a second connecting wall 233 via the discharge hole 234. The discharge hole 234 and the gap can form a discharge channel. Especially when the connecting wall 233 is arranged in the peripheral region of the pressure relief mechanism 213, the discharge hole 234 is beneficial to guiding the high-temperature and high-pressure substances to flow towards the position where the pressure relief mechanism 213 is located, thus actuating the pressure relief mechanism 213.

In one possible embodiment, the connecting walls 233 that extend on the insulating member 23 along the thickness direction Z of the first wall 211 and the width direction Y of the first wall 211 are provided with a discharge hole 234, as shown in FIGs. 7 to 9. Optionally, the connecting walls 233 that extend on the insulating member 23 along the thickness direction Z of the first wall 211 and the lengthwise direction X of the first wall 211 may also be provided with a discharge hole 234.

The discharge hole 234 on the connecting wall 233, together with the accommodating cavity 26, can form a discharge channel to guide high-temperature and high-pressure substances to flow in a direction towards the pressure relief mechanism 213, facilitating the actuation of the pressure relief mechanism to rapidly discharge the high-temperature and high-pressure substances inside the battery cell, thus improving the reliability of the battery cell 20.

According to some embodiments of the present application, optionally, the connecting wall 233 includes a first connecting portion 2331. The first connecting portion 2331 is arranged on two sides of the pressure relief mechanism 213 in the lengthwise direction X of the first wall 211. The discharge hole 234 includes a first through hole 2341. The first through hole 2341 penetrates through the first connecting portion 2331 in the lengthwise direction X of the first wall 211. The first through hole 2341 is used for forming the discharge channel.

As shown in FIGs. 7 to 12, the first connecting portion 2331 refers to a portion in the connecting wall 233, which is arranged on two sides of the pressure relief mechanism 213 in the lengthwise direction X of the first wall 211. In some embodiments, the pressure relief mechanism 213 can be arranged in the middle region of the first wall 211, so the first connecting portion 2331 can be arranged in the middle region of the insulating member 23 corresponding to the position of the pressure relief mechanism 213.

The first through hole 2341 refers to a discharge hole 234 arranged on the first connecting portion 2331 in the discharge hole 234. The first through hole 2341 penetrates through the first connecting portion 2331 in the lengthwise direction X of the first wall 211. The first connecting portion 2331 is arranged along the lengthwise direction X of the first wall 211, so the first through hole 2341 can bring the region where the pressure relief mechanism 213 is located in communication with the region where the accommodating cavity 26 is located, thereby forming at least a portion of the discharge channel.

The first connecting portion 2331 and the first through hole 2341 can form a discharge channel in the peripheral region of the pressure relief mechanism 213, which is beneficial to guiding the high-temperature and high-pressure substances generated due to thermal runaway to flow towards the region of the pressure relief mechanism 213 when thermal runaway occurs inside the battery cell 20, so that the pressure relief mechanism 213 can be actuated in time, thus improving the reliability of the battery cell 20.

According to some embodiments of the present application, optionally, the insulating member 23 has a second through hole 236 penetrating through the insulating member 23 in the thickness direction Z of the first wall 211. The second through hole 236 is arranged opposite to the pressure relief mechanism 213. The second through hole 236 is used for forming the discharge channel.

As shown in FIGs. 7 to 12, the second through hole 236 penetrates through the insulating member 23 in the thickness direction Z of the first wall 211. In one possible embodiment, the insulating member 23 includes a first insulating wall 231 or a second insulating wall 232, and thus, the second through hole 236 can penetrate through the first insulating wall 231 or the second insulating wall 232 in the thickness direction Z of the first wall 211. Optionally, the insulating member 23 includes a first insulating wall 231 and a second insulating wall 232, and thus, the second through hole 236 penetrates through both the first insulating wall 231 and the second insulating wall 232. The second through hole 236 is arranged opposite to the pressure relief mechanism 213, and thus, the second through hole 236 can bring the region where the pressure relief mechanism 213 is located in communication with the region of the electrode assembly 22 at the position where the pressure relief mechanism 213 is arranged opposite, thus forming at least a portion of the discharge channel.

The second through hole 236 can be in more direct communication with the pressure relief mechanism 213 and the electrode assembly 22, so that the high-temperature and high-pressure substances inside the battery cell 20 can flow to the pressure relief mechanism 213 more quickly; thus, the pressure relief mechanism 213 can be actuated in time, thus improving the reliability of the battery cell 20.

According to some embodiments of the present application, optionally, the supporting member 24 is arranged at an edge of the insulating member 23 in a plane perpendicular to the thickness direction Z of the first wall 211.

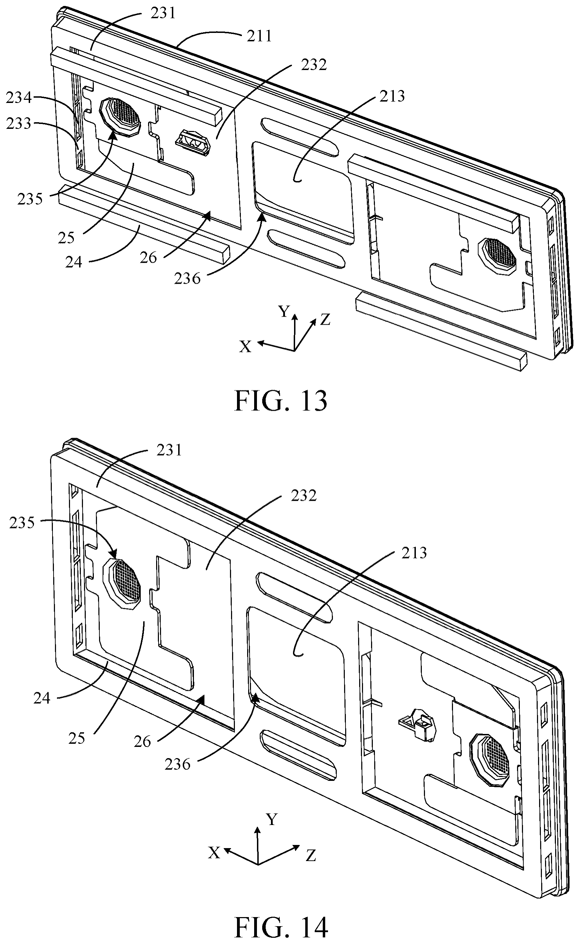

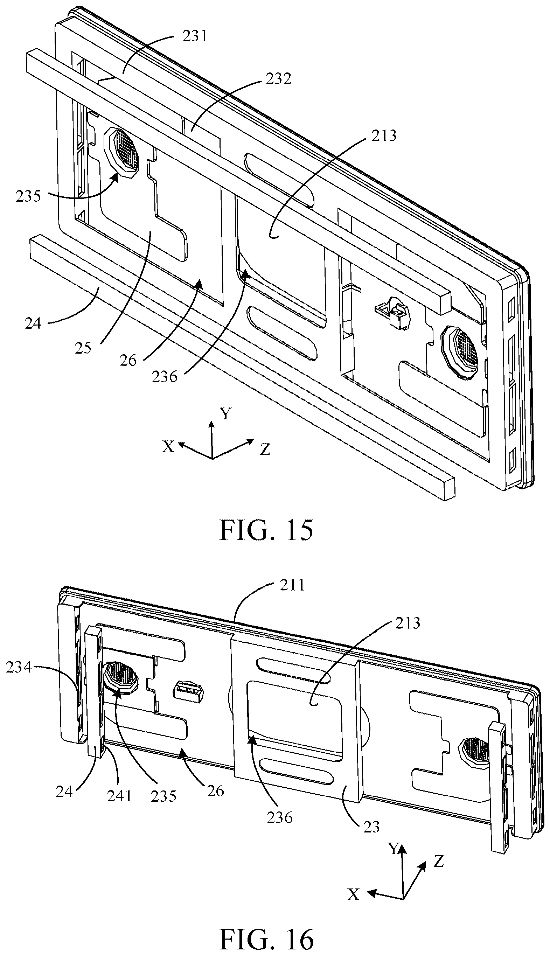

As shown in FIGs. 13 to 15, FIG. 13 is an exploded schematic structural view of the structure shown in FIG. 7, FIG. 14 is a schematic structural view of another first wall, insulating member and supporting member, and FIG. 15 is an exploded schematic structural view of the structure shown in FIG. 14.

In the plane perpendicular to the thickness direction Z of the first wall 211, the supporting member 24 can be arranged at an edge of the insulating member 23. Specifically, in this plane, the insulating member 23 can be approximately rectangular, and the supporting member 24 can be located on a long side or a wide side of the rectangle. For example, FIGs. 13 to 15 show schematically the case where the supporting member 24 is arranged on a long side of the rectangle and the supporting member 24 extends along the lengthwise direction X of the first wall 211. Similarly, the supporting member 24 can extend along the width direction Y of the first wall 211 and be arranged on a wide side of the rectangle.

The supporting member 24 is arranged at an edge of the insulating member 23 and does not easily interfere with other members in the battery cell 20, which is beneficial to improving the qualification rate of the battery cell 20.

According to some embodiments of the present application, optionally, the supporting member 24 is located at an edge of the insulating member 23 in the width direction Y of the first wall 211.

The edge of the insulating member 23 in the width direction Y of the first wall 211 refers to a long side of the insulating member 23, i.e., a side of the insulating member 23 that extends along the lengthwise direction X of the first wall 211.

In some embodiments, the supporting member 24 can extend from one end of a long side of the insulating member 23 to the other end. Optionally, the supporting member 24 may be arranged only at a portion of a long side of the insulating member 23.

The arrangement of the supporting member 24 along a longer side of the insulating member 23 enable the supporting member 24 to support the insulating member 23 and the electrode assembly 22 to a particular extent in a wider range, thus restricting the deformation of the exhaust channel.

According to some embodiments of the present application, optionally, the supporting member 24 is arranged at intervals along the lengthwise direction X of the first wall 211.

As shown in FIG. 13, the supporting member 24 can extend along the lengthwise direction X of the first wall 211 and be arranged at intervals in the lengthwise direction X of the first wall 211, so that the overall weight of the battery cell 20 can be reduced while the deformation of the discharge channel is restricted.

Optionally, taking FIG. 13 as an example, FIG. 13 shows that two supporting members 24 are arranged in the lengthwise direction X of the first wall 211 and the interval between the two supporting members 24 is located in a peripheral region of the pressure relief mechanism 213. This can provide more space for the movement of the high-temperature and high-pressure substances towards the pressure relief mechanism 213, which is beneficial to guiding the high-temperature and high-pressure substances to move towards the pressure relief mechanism 213.

According to some embodiments of the present application, optionally, the supporting member 24 is located at an edge of the insulating member 23 in the lengthwise direction X of the first wall 211.

The edge of the insulating member 23 in the lengthwise direction X of the first wall 211 refers to a wide side of the insulating member 23, i.e., a side of the insulating member 23 that extends along the width direction Y of the first wall 211. As shown in FIG. 16, the supporting member 24 can extend along the width direction Y of the first wall 211. Optionally, the supporting member 24 can be arranged at intervals along the width direction Y of the first wall 211.

In some embodiments, the supporting member 24 can be at the edges of the insulating member 23 in both the lengthwise direction X and width direction Y of the first wall 211.

The supporting member 24 is arranged at a wide side of the insulating member 23, so that the deformation of the insulating member 23 can be restricted at the corresponding position of the insulating member 23. Moreover, the movement of the electrode assembly 22 towards the pressure relief mechanism 213 is restricted to a particular extent, and the probability of the electrode assembly 22 blocking the pressure relief mechanism 213 is reduced, thereby maintaining the discharge channel unobstructed.

According to some embodiments of the present application, optionally, the supporting member 24 is arranged in the peripheral region of the pressure relief mechanism 213.

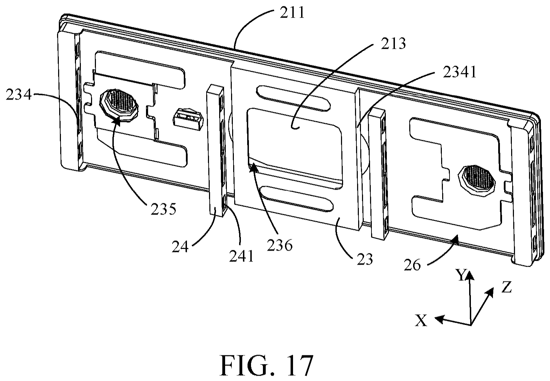

FIG. 17 shows the case where the supporting member 24 extends along the width direction Y of the first wall 211 and is arranged at least one side of the pressure relief mechanism 213 in the lengthwise direction X of the first wall 211. Optionally, the supporting member 24 can extend along the lengthwise direction X of the first wall 211 and is arranged on at least one side of the pressure relief mechanism 213 in the width direction Y of the first wall 211. Optionally, the supporting member 24 can be arranged opposite to the pressure relief mechanism 213 in the thickness direction Z of the first wall 211.

The supporting member 24 is arranged in the peripheral region of the pressure relief mechanism 213, so that the further movement of the electrode assembly 22 near the pressure relief mechanism 213 towards the pressure relief mechanism 213 can be more directly restricted, thereby restricting the deformation of the discharge channel near the pressure relief mechanism 213. The high-temperature and high-pressure substances inside the battery cell 20 can reach the pressure relief mechanism 213 via the discharge channel, so that the pressure relief mechanism 213 is actuated to relieve the high-temperature and high-pressure substances inside the battery cell 20, thus improving the reliability of the battery cell 20.

According to some embodiments of the present application, optionally, a plurality of supporting members 24 enclose in the peripheral region of the pressure relief mechanism 213 to form an accommodating space, and the pressure relief mechanism 213 is arranged in the accommodating space.

In some embodiments, the four sides of the pressure relief mechanism 213 can all be provided with the supporting member 24. For example, both sides of the pressure relief mechanism 213 in the lengthwise direction X and width direction Y of the first wall 211 can be provided with the supporting member 24. In this case, the plurality of supporting members 24 can enclose to form a particular accommodating space, and the pressure relief mechanism 213 is enclosed in the middle, that is, the pressure relief mechanism 213 is located in the accommodating space.

A plurality of supporting members 24 are arranged around the pressure relief mechanism 213, so that the deformation of the structure around the pressure relief mechanism 213 can be further restricted to maintain the discharge channel in the peripheral region of the pressure relief mechanism 213 unobstructed.

According to some embodiments of the present application, optionally, the supporting member 24 is provided with a third through hole 241, and the third through hole 241 is used for forming a discharge channel.

The third through hole 241 can be in communication with the accommodating cavity 26, optionally with the electrode assembly 22 and a region where it is located, optionally with the pressure relief mechanism 213 and a region where it is located.

In one possible embodiment, the third through hole 241 can penetrate through the supporting member 24 along a particular direction. For example, where the supporting member 24 extends along the width direction Y of the first wall 211, the third through hole 241 can penetrate through the supporting member 24 along the lengthwise direction X of the first wall 211. Optionally, where the supporting member 24 extends along the lengthwise direction X of the first wall 211, the third through hole 241 can penetrate through the supporting member 24 along the width direction Y of the first wall 211. In another possible embodiment, the third through hole 241 can form channels on a supporting structure in two intersecting directions, respectively. For example, the openings of the third through hole 241 on the surfaces of the supporting member 24 can be located on the intersecting surfaces of the supporting member 24, respectively, and these openings are in communication with each other inside the supporting member 24.

In one possible embodiment, the third through hole 241 can be arranged opposite to the through hole arranged on the insulating member 23, and specifically, the third through hole can be in communication with the through hole on the insulating member 23 and, together with the through hole, forms at least a portion of the discharge channel. For example, the third through hole 241 can be in communication with the discharge hole 234. Specifically, the third through hole can be in communication with the discharge hole 234 arranged at an edge of the insulating member 23. Optionally, the third through hole 241 can be in communication with the first through hole 2341; and optionally, the third through hole 241 can be in communication with the second through hole 236.

The third through hole 241 penetrates through the supporting structure to form at least a portion of the discharge channel. The high-temperature and high-pressure substances inside the battery cell 20 can penetrate through the third through hole 241. In some embodiments, by designing the path of the third through hole 241, the high-temperature and high-pressure substances inside the battery cell 20 can be guided to flow in a particular direction.

The third through hole 241 can provide a path for the flow of the high-temperature and high-pressure substances inside the battery cell 20, which is beneficial to the discharge of the high-temperature and high-pressure substances, so that the pressure relief mechanism 213 can be actuated in time, thus improving the reliability of the battery cell 20.

According to some embodiments of the present application, optionally, the supporting member 24 includes an elongated body portion.

The supporting member 24 provided by the embodiments of the present application includes an elongated body portion. The body portion refers to a portion of the supporting member 24 that extends in a particular direction. In some embodiments, the supporting member 24 can extends from one end of the accommodating cavity 26 to the other end along the lengthwise direction X of the first wall 211. Optionally, the body portion may have a columnar structure, such as a cylinder or a prism. In some embodiments, the supporting member 24 can further include a structure such as protrusion or a groove.

The elongated body portion can function to restrict the movement of the electrode assembly 22 in a relatively large range without affecting the discharge capacity of the discharge channel, thereby maintaining the discharge channel unobstructed, reducing the possibility that the high-temperature and high-pressure substances cannot be discharged due to the deformation of the discharge channel, thus improving the reliability of the battery cell 20.

According to some embodiments of the present application, optionally, the melting point of the supporting member 24 is higher than the melting point of the insulating member 23.

In a later period of thermal runaway, the electrode assembly 22 may be driven by the high-temperature and high-pressure substances to move towards the first wall 211, or even abut against the insulating member 23. The insulating member 23 melts and softens under the action of the high-temperature and high-pressure substances, and deformation easily occurs when the electrode assembly 22 further moves towards the first wall 211, making the original discharge channel blocked, so that the high-temperature and high-pressure substances cannot reach the pressure relief mechanism 213 via the discharge channel. In an embodiment of the present application, the melting point of the supporting member 24 is higher than the melting point of the insulating member 23. Thus, in the same temperature environment, the supporting member 24 is less likely to liquefy or melt than the insulating member 23 and can maintain its original shape and position in the accommodating cavity 26. The supporting member functions to support the electrode assembly 22 that moves towards the pressure relief mechanism 213, making it difficult for the electrode assembly 22 to move to the position where the discharge channel is blocked, thus restricting the deformation of the discharge channel, providing a discharge channel for the high-temperature and high-pressure substances to reach the pressure relief mechanism 213, which makes it beneficial to improve the reliability of the battery cell 20.

According to some embodiments of the present application, optionally, the melting point of the supporting member 24 is higher than 100°C.

In one example, the material of the supporting member 24 may be a single material. For example, the material of the supporting member 24 is a single material such as an aluminum material or a copper material. In this case, the supporting member 24 has a fixed melting point.

In another example, the material of the supporting member 24 can be a composite material. For example, the supporting member 24 can be made of a mixed material of an aluminum material and a copper material. In this case, the supporting member 24 does not have a fixed melting point, that is, the melting point of the supporting member 24 is in a melting point range of each of the materials. For example, the melting point of the aluminum material is 660°C and the melting point of copper is 1083°C; thus, the melting point range of the supporting member 24 is 660°C-1083°C. In addition, the melting point of the supporting member 24 being higher than the melting point of the insulating member 23 can be understood that the minimum melting point in the melting point range of the supporting member 24 is higher than the melting point of the insulating member 23.

For example, where the positive electrode material of the battery cell 20 is a compound with an olivine structure, the melting point of the supporting member 24 can be higher than 150°C, so that the thermal runaway gas can smoothly reach the pressure relief mechanism 213 before a valve of the pressure relief mechanism 213 is opened. Further optionally, the melting point of the supporting member 24 is higher than 500°C, which can maintain the mechanical strength of the battery cell 20 even during thermal runaway. The compound with the olivine structure may be selected from lithium iron phosphate, lithium manganese iron phosphate, or a mixture of lithium iron phosphate and lithium manganese iron phosphate.

Still for example, where the positive electrode material of the battery cell 20 contains a layered compound, the melting point of the supporting member 24 can be higher than 100°C, so that the thermal runaway gas can smoothly reach the pressure relief mechanism 213 before the valve of the pressure relief mechanism 213 is opened. Further optionally, the melting point of the supporting member 24 is higher than 400°C, which can maintain the mechanical strength of the battery cell 20 even during thermal runaway. The layered compound can be selected from a lithium nickel cobalt manganese oxide ternary layered material, or a mixture of lithium iron phosphate and the lithium nickel cobalt manganese oxide ternary layered material, or a mixture of lithium manganese iron and the lithium nickel cobalt manganese oxide ternary layered material.

Optionally, the material of the supporting member 24 may be a high-temperature-resistant material. For example, the material of the supporting member 24 may include at least one hard material selected from metals, graphite, polytetrafluoroethylene, mica, ceramic, or other materials.

In this embodiment, a supporting member 24 with a melting point of higher than 100°C is used, which is beneficial to being less easily melted when thermal runaway occurs in the battery cell 20. Thus, an exhaust channel in communication with the pressure relief mechanism 213 can be formed between the first wall 211 and the electrode assembly 22, so that the thermal runaway gas can be discharged out of the battery cell 20 in time by the pressure relief mechanism 213, which is beneficial to improving the reliability of the battery cell 20.

According to some embodiments of the present application, optionally, the first wall 211 is provided with an electrode terminal 214. The battery cell 20 includes a connecting member 25. The connecting member 25 is used for electrically connecting the electrode terminal 214 and the electrode assembly 22. The insulating member 23 has a clearance hole 235 penetrating through the insulating member 23 in the thickness direction Z of the first wall 211. At least a portion of the connecting member 25 is accommodated in the clearance hole 235.

Optionally, the battery cell 20 can further include an electrode terminal 214. The first wall 211 is generally in a plate shape. The electrode terminal 214 is fixed on a surface of the first wall 211. The electrode terminal 214 includes a positive electrode terminal 214a and a negative electrode terminal 214b. Each electrode terminal 214 is correspondingly provided with a connecting member 25, which may also be referred to as a current collecting member, located between the first wall 211 and the electrode assembly 22, for electrically connecting the electrode assembly 22 and the electrode terminal 214. The positive electrode tab(s) of one or more electrode assemblies 22 is connected to the positive electrode terminal 214a via one connecting member 25, and the negative electrode tab(s) of one or more electrode assemblies 22 is connected to the negative electrode terminal 214b via another connecting member 25. In this battery cell 20, a single one or more electrode assemblies 22 can be provided according to actual use requirements.

The clearance hole 235 penetrates through the insulating member 23 to avoid the connecting member 25, so that on the one hand, the connecting member 25 is electrically connected to the electrode terminal 214; on the other hand, the connecting member 25 is electrically connected to the electrode assembly 22. As shown in FIGs. 13 to 17, in some embodiments, the shape of the clearance hole 235 may be the same as that of the connecting member 25. In this case, the connecting member 25 can be fully accommodated in the clearance hole 235. Optionally, the area occupied by the clearance hole 235 can be greater than the area occupied by the connecting member 25 on the first wall 211, and the connecting member 25 can likewise be completely accommodated in the clearance hole 235. Optionally, the clearance hole 235 may be provided only at a portion where the connecting member 25 is connected to the electrode terminal 214. In this case, the portion of the connecting member 25 for connecting the electrode terminal 214 is accommodated in the clearance hole 235, while the other portion is accommodated in the accommodating cavity 26.

The clearance hole 235 can provide a space for the connecting member 25 to electrically connect the electrode terminal 214 and the electrode assembly 22, so that the electric energy generated in the electrode assembly 22 can be led out of the battery cell 20 to provide electric energy for an electrical device.

According to some embodiments of the present application, optionally, the supporting member 24 is in interference fit with the accommodating cavity 26.

Interference fit refers to the size of the supporting member 24 in a particular direction is greater than the size of the accommodating cavity 26 in this direction. During assembly, by means of an elasticity of the material of the insulating member 23, the accommodating cavity 26 is expanded and deformed in this direction, and thus, the supporting member 24 can be accommodated. After the accommodating cavity 26 is restored, a force can be generated to fix the supporting member 24 in the accommodating cavity 26.

In one possible embodiment, the supporting member 24 can be in interference fit with the accommodating cavity 26 in the lengthwise direction X of the first wall 211. The supporting member 24 can abut against the connecting wall 233 on the insulating member 23 in the lengthwise direction X of the first wall 211, so that the size of the supporting member 24 in the lengthwise direction X of the first wall 211 may be slightly greater than the distance between the two connecting walls 233 arranged opposite in the lengthwise direction X of the first wall 211. During assembly, the size of the accommodating cavity 26 in the lengthwise direction X of the first wall 211 can be expanded by an external force, such that the supporting member 24 is placed in the accommodating cavity 26; thus, after the structure of the accommodating cavity 26 in the lengthwise direction X of the first wall 211 is restored, the supporting member 24 can be tightly clamped in the lengthwise direction X of the first wall 211.

Optionally, the supporting member 24 can be in interference fit with the accommodating cavity 26 in the thickness direction Z of the first wall 211. For example, the insulating member 23 is provided with a first insulating wall 231, so that the first insulating wall 231 and the first wall 211 can apply an action of force to the supporting member 24 in the thickness direction Z of the first wall 211. Still for example, the insulating member 23 is provided with a first insulating wall 231 and a second insulating wall 232, so that the first insulating wall 231 and the second insulating wall 232 can apply an action of force to the supporting member 24 in the thickness direction Z of the first wall 211. The size of the supporting member 24 in the thickness direction Z of the first wall 211 may be slightly greater than the size of the accommodating cavity 26 in the thickness direction Z of the first wall 211. The size of the accommodating cavity 26 in the thickness direction Z of the first wall 211 may refer to a distance between two surfaces forming the accommodating cavity in the thickness direction Z of the first wall 211. During assembly, the size of the accommodating cavity 26 in the thickness direction Z of the first wall 211 can be expanded by an external force, such that the supporting member 24 can be placed in the accommodating cavity 26; thus, after the structure of the accommodating cavity 26 in the thickness direction Z of the first wall 211 is restored, the supporting member 24 can be tightly clamped in the thickness direction Z of the first wall 211.

Optionally, the supporting member 24 can be in interference fit with the accommodating cavity 26 in the width direction Y of the first wall 211. For example, where the supporting member 24 extends along the width direction Y of the first wall 211, the size of the supporting member 24 in the width direction Y of the first wall 211 may be slightly greater than the size of the accommodating cavity 26 in the width direction Y of the first wall 211. The size of the accommodating cavity 26 in the width direction Y of the first wall 211 may refer to a distance between two surfaces of the insulating member 23 in contact with the supporting member 24 in the width direction Y of the first wall 211. During assembly, the size of the accommodating cavity 26 in the width direction Y of the first wall 211 can be expanded by an external force, such that the supporting member 24 can be placed in the accommodating cavity 26; thus, after the structure of the accommodating cavity 26 in the width direction Y of the first wall 211 is restored, the supporting member 24 can be tightly clamped in the width direction Y of the first wall 211.

Optionally, the accommodating cavity 26 can be in interference fit with the supporting member 24 simultaneously in various directions.

Thus, the supporting member 24 can be relatively conveniently fixed in the accommodating cavity 26, so that the supporting member 24 does not easily fall off the accommodating cavity 26, which is beneficial to maintaining the discharge channel unobstructed when high-temperature and high-pressure substances are generated inside the battery cell 20, thus facilitating the improvement of the reliability of the battery cell 20.

According to some embodiments of the present application, optionally, a surface of the supporting member 24 towards the electrode assembly 22 in the thickness direction Z of the first wall 211 and/or a surface of the supporting member 24 towards the first wall 211 in the thickness direction Z of the first wall 211 have an insulating layer.

Specifically, in some embodiments, the surface of the supporting member 24 towards the first wall 211 can be provided with an insulating layer to reduce the possibility of the first wall 211 being charged due to the contact between the supporting member 24 and the first wall 211.

In some embodiments, the surface of the supporting member 24 towards the electrode assembly 22 is provided with an insulating layer to reduce the possibility of the supporting member 24 conducting the electric energy generated by the electrode assembly 22 to the first wall 211.

In some embodiments, the surface of the supporting member 24 towards the first wall 211 and the surface thereof towards the electrode assembly 22 can be both provided with an insulating layer, or the surfaces of the supporting member 24 can be both coated with an insulating substance to improve the insulating effect of the supporting member 24.

In some embodiments, the supporting member 24 may be made of an insulating material, for example, a high-temperature-resistant ceramic.

The insulating layer can improve the insulativity between the supporting member 24 and the first wall 211 and reduce the possibility of the shell 21 of the battery cell 20 being charged by the supporting member 24, thus improving the reliability of the battery cell 20.

The present application further provides a battery including the battery cell 20 according to any one of the above embodiments.

The present application further provides an electrical device including the battery according to any one of the above embodiments. The battery is used for providing electric energy for the electrical device.

An embodiment of the present application provides a battery cell 20. A shell 21 of the battery cell 20 includes a first wall 211 and a case 212. An electrode assembly 22 is accommodated in the case 212. The first wall 211 is provided with an electrode terminal 214 and a pressure relief mechanism 213. The electrode terminal 214 is electrically connected to the electrode assembly 22 via a connecting member 25. An insulating member 23 is provided between the first wall 211 and the electrode assembly 22. The insulating member 23 has an accommodating cavity 26. A supporting member 24 is accommodated in the accommodating cavity 26. The insulating member 23 has a discharge channel in communication with the pressure relief mechanism 213 and the electrode assembly 22. The supporting member 24 is used for restricting the deformation of the discharge channel. The melting point of the supporting member 24 can be higher than the melting point of the insulating member 23. Where thermal runaway occurs inside the battery cell 20, the supporting member 24 does not easily melt under the action of the high-temperature and high-pressure substances, so that the shape and position of the insulating member 23 can be maintained while the movement of the electrode assembly 22 towards the first wall 211 is restricted, thus maintaining the discharge channel unobstructed. Thus, the pressure relief mechanism 213 can be normally actuated to relieve the high-temperature and high-pressure substances, thus improving the reliability of the battery cell 20.

The foregoing description is merely specific embodiments of the present application, but is not intended to limit the scope of protection of the present application. Any variations or replacements readily conceivable to those skilled in the art who are familiar with the technical field, within the technical scope disclosed in the present application, shall fall within the scope of protection of the present application. Therefore, the scope of protection of the present application shall be subject to the scope of protection of the claims.

## Claims

1. A battery cell, comprising:
a shell (21), wherein the shell (21) has a first wall (211), and the first wall (211) is provided with a pressure relief mechanism (213);
an electrode assembly (22), wherein the electrode assembly (22) is accommodated in the shell (21);
an insulating member (23), wherein the insulating member (23) is arranged between the electrode assembly (22) and the first wall (211), the insulating member (23) has an accommodating cavity (26), and the insulating member (23) has a discharge channel in communication with the pressure relief mechanism (213) and the electrode assembly (22); and
a supporting member (24), wherein the supporting member (24) is accommodated in the accommodating cavity (26) for restricting a deformation of the discharge channel.

2. The battery cell according to claim 1, wherein
the insulating member (23) comprises a first insulating wall (231), and the accommodating cavity (26) is formed between the first insulating wall (231) and the first wall (211).

3. The battery cell according to claim 2, wherein
a projection of the first insulating wall (231) in a thickness direction (Z) of the first wall (211) covers a projection of the supporting member (24) in the thickness direction (Z) of the first wall (211).

4. The battery cell according to claim 2 or 3, wherein
the insulating member (23) comprises a second insulating wall (232), the second insulating wall (232) is arranged between the first insulating wall (231) and the first wall (211), and the accommodating cavity (26) is formed between the second insulating wall and the first insulating wall (231).

5. The battery cell according to claim 1, wherein
the insulating member (23) comprises a second insulating wall (232), the second insulating wall (232) is arranged on a surface of the insulating member (23) towards the first wall (211) in the thickness direction (Z) of the first wall (211), and the accommodating cavity (26) is formed between the second insulating wall (232) and a surface of the insulating member (23) towards the electrode assembly (22) in the thickness direction (Z) of the first wall (211).

6. The battery cell according to claim 4, wherein
the insulating member (23) comprises a connecting wall (233), the connecting wall (233) connects the first insulating wall (231) to the second insulating wall (232), and the connecting wall (233) extends along the first direction (Z).

7. The battery cell according to claim 6, wherein
the connecting wall (233) is provided with a discharge hole (234) penetrating through the connecting wall (233) in the thickness direction of the connecting wall (233).

8. The battery cell according to claim 7, wherein
the connecting wall (233) comprises a first connecting portion (2331), the first connecting portion (2331) is arranged on both sides of the pressure relief mechanism (213) in a lengthwise direction (X) of the first wall (211), the discharge hole (234) comprises a first through hole (2341), the first through hole (2341) penetrates through the first connecting portion (2331) in the lengthwise direction (X) of the first wall (211), and the first through hole (2341) is used for forming the discharge channel.

9. The battery cell according to any one of claims 1 to 8, wherein
the insulating member (23) has a second through hole (236) penetrating through the insulating member (23) in the thickness direction (Z) of the first wall (211), the second through hole (236) is arranged opposite to the pressure relief mechanism (213), and the second through hole (236) is used for forming the discharge channel.

10. The battery cell according to any one of claims 1 to 9, wherein
the supporting member (24) is arranged at an edge of the insulating member (23) in a plane perpendicular to the thickness direction (Z) of the first wall (211).

11. The battery cell according to claim 10, wherein
the supporting member (24) is located at an edge of the insulating member (23) in a width direction (Y) of the first wall (211).

12. The battery cell according to claim 11, wherein
the supporting member (24) is arranged at intervals along the lengthwise direction (X) of the first wall (211).

13. The battery cell according to any one of claims 10 to 12, wherein
the supporting member (24) is located at an edge of the insulating member (23) in the lengthwise direction (X) of the first wall (211).

14. The battery cell according to any one of claims 1 to 13, wherein
the supporting member (24) is arranged in a peripheral region of the pressure relief mechanism (213).

15. The battery cell according to claim 14, wherein
a plurality of the supporting members (24) enclose in the peripheral region of the pressure relief mechanism (213) to form an accommodating space, and the pressure relief mechanism (213) is arranged in the accommodating space.

16. The battery cell according to claims 10 to 15, wherein
the supporting member (24) is provided with a third through hole (241), and the third through hole (241) is used for forming the discharge channel.

17. The battery cell according to any one of claims 1 to 16, wherein
the supporting member (24) comprises an elongated body portion.

18. The battery cell according to any one of claims 1 to 17, wherein
the melting point of the supporting member (24) is higher than the melting point of the insulating member (23).

19. The battery cell according to claim 18, wherein
the melting point of the supporting member (24) is higher than 100°C.

20. The battery cell according to any one of claims 1 to 19, wherein the first wall (211) is provided with an electrode terminal (214), and the battery cell comprises:
a connecting member (25), wherein the connecting member (25) is used for electrically connecting the electrode terminal (214) and the electrode assembly (22), the insulating member (23) has a clearance hole (235) penetrating through the insulating member (23) in the first direction (Z), and at least a portion of the connecting member (25) is accommodated in the clearance hole (235).

21. The battery cell according to any one of claims 1 to 20, wherein
the supporting member (24) is in interference fit with the accommodating cavity (26).

22. The battery cell according to any one of claims 1 to 21, wherein
a surface of the supporting member (24) towards the electrode assembly (22) in the thickness direction (Z) of the first wall (211) and/or a surface of the supporting member (24) towards the first wall (211) in the thickness direction (Z) of the first wall (211) have an insulating layer.

23. A battery, comprising:
the battery cell according to any one of claims 1 to 22.

24. An electrical device, comprising the battery according to claim 23, wherein the battery is used for providing electric energy for the electrical device.
